# EUROPÄISCHE PATENTSCHRIFT

(11) **EP 3 640 601 B1**
(45) Veröffentlichungstag und Bekanntmachung des Hinweises auf die Patenterteilung: **13.09.2023**
(21) Anmeldenummer: 19187970.9
(22) Anmeldetag: 24.07.2019
(51) Int. Cl.: G01D 3/036, G01D 5/20, G01B 7/00, G01D 5/244

(54) **POSITIONSMESSEINRICHTUNG UND VERFAHREN ZUM BETREIBEN EINER POSITIONSMESSEINRICHTUNG**
POSITION MEASURING DEVICE AND METHOD FOR OPERATING SAME
DISPOSITIF DE MESURE DE POSITION ET PROCÉDÉ DE FONCTIONNEMENT D'UN DISPOSITIF DE MESURE DE POSITION

(30) Priorität: 19.10.2018 DE 102018217934
(43) Veröffentlichungstag der Anmeldung: 22.04.2020
(73) Patentinhaber: Dr. Johannes Heidenhain GmbH, 83301 Traunreut (DE)
(72) Erfinder: SCHWAIGER, Werner, 83346 Bergen (DE); ROSENEGGER, Gregor, 83236 Übersee (DE); MITTERER, Andreas, 83527 Haag (DE); SCHMIDT, Ludwig, 83301 Traunreut (DE); STRASSER, Erich, 83308 Trostberg (DE)

(56) Entgegenhaltungen:
- DE-A1-102016 224 012
- JP-A- H1 151 702
- JP-A- 2001 201 362
- US-A1- 2009 095 892

## Beschreibung

### BEZEICHNUNG DER ERFINDUNG

Positionsmesseinrichtung und Verfahren zum Betreiben einer Positionsmesseinrichtung

### GEBIET DER TECHNIK

Die vorliegende Erfindung betrifft eine Positionsmesseinrichtung nach Anspruch 1, sowie ein Verfahren zum Betreiben einer derartigen Positionsmesseinrichtung nach Anspruch 7.

### STAND DER TECHNIK

In der Automatisierungstechnik kommen häufig Positionsmesseinrichtungen zum Einsatz, die die Winkelstellung und/oder die Anzahl zurückgelegter Umdrehungen von Wellen messen. Derartige Positionsmesseinrichtungen werden auch als Drehgeber oder Winkelmessgeräte bezeichnet. Die zu messenden Wellen können Motorwellen von Elektromotoren oder Wellen von anderen sich drehenden Maschinenkomponenten sein. Für die Messung umfasst ein Drehgeber einen Teilungsträger mit einer Messteilung, sowie eine Abtastvorrichtung, die Rotationsbewegungen der Messteilung detektiert und auswertet. Der Teilungsträger ist scheiben- oder ringförmig und drehfest mit der zu messenden Welle verbunden, so dass er mit dieser rotiert. Die Abtastvorrichtung dagegen ist gegenüber dem Teilungsträger fest mit einer Maschinenkomponente, beispielsweise einem Gehäuse, verbunden. Der Positionsmessung können verschiedene physikalische Abtastprinzipien zugrunde liegen, beispielsweise optische, magnetische, induktive oder kapazitive. Die DE 197 51 853 A1 beschreibt beispielsweise eine Positionsmesseinrichtung, die nach dem induktiven Messprinzip arbeitet.

Um zu erreichen, dass die Abtastsignale, die von der Abtastvorrichtung gemessen werden, möglichst nur von der Rotationsbewegung abhängig sind, wird versucht, den Abtastabstand zwischen der Abtastvorrichtung und der Messteilung, der sich ebenfalls auf die Abtastsignale auswirkt, konstant zu halten.

Häufig sind in unmittelbarer Nähe der Einbauposition einer Positionsmesseinrichtung bewegliche mechanische Komponenten angeordnet, deren Position von zusätzlichen Sensoren überwacht wird. Dabei kann es sich um lineare Positionsmesseinrichtungen zur Messung von linearen Verschiebungen oder Näherungssensoren zur Bestimmung des Abstands zweier Maschinenkomponenten zueinander handeln. Ein typisches Beispiel hierfür sind Motorbremsen, die in einem elektrischen Antrieb dazu dienen, Drehbewegungen mechanisch zu verzögern, bzw. zu verhindern. Hier wird für einen Bremsvorgang ein bewegliches Maschinenteil (Ankerscheibe) mit einer Kraft gegen eine Bremsscheibe gedrückt, die ebenfalls drehfest mit der abzubremsenden Welle verbunden ist. Die Bremswirkung kommt durch die dabei entstehende Reibung zustande. An den Reibungsflächen ist ein Bremsbelag angeordnet, der sich mit der Zeit abnützt. Aus der Bestimmung der Position der Ankerscheibe kann nun festgestellt werden, ob sich die Bremse in einem betätigten oder unbetätigten (gelüfteten) Zustand befindet, sowie Rückschlüsse auf die Dicke der Bremsbeläge gezogen werden. Letzteres ist wichtig, um die Bremsbeläge vorzeitig im Zuge einer Wartung der Maschine austauschen zu können.

Die DE 10 2016 224 012 A1 beschreibt eine Lösung zur Bestimmung des Zustands der Bremse sowie der Dicke der Bremsbeläge mittels einer

Positionsmesseinrichtung. Hier wird die Positionsmesseinrichtung mit der Ankerscheibe mitbewegt, so dass sich beim Bremsvorgang der Abtastabstand, also der Abstand zwischen der Abtastvorrichtung und dem Teilungsträger ändert. Dies führt zu einer Änderung der Amplitude der Positionssignale, aus der wiederum auf den Zustand der Bremse geschlossen werden kann. Häufig ist es aber nicht gewünscht, die Positionsmesseinrichtung beweglich anzuordnen, da, wie oben erwähnt, die Amplituden der Abtastsignale bevorzugt konstant gehalten werden sollen.

Die Dokumente JP H11 51702 A, JP 2001 201362 A und US 2009/095892 A1 zeigen ebenfalls Positionsmesseinrichtungen.

### ZUSAMMENFASSUNG DER ERFINDUNG

Es ist eine Aufgabe der vorliegenden Erfindung, eine Vorrichtung anzugeben, mit der die Position eines Maschinenteils im Umfeld einer Positionsmesseinrichtung mit geringem Zusatzaufwand messbar ist.

Diese Aufgabe wird gelöst durch eine Positionsmesseinrichtung nach Anspruch 1.

Hierzu wird eine Positionsmesseinrichtung vorgeschlagen, umfassend
- einen Teilungsträger, der drehfest mit einer Welle verbindbar ist, mit einer Messteilung, die im montierten Zustand des Teilungsträgers radial um eine Drehachse der Welle angeordnet ist,
- eine Abtasteinheit zur Erzeugung von Positionssignalen durch Abtastung der Messteilung,
- eine Positionsverarbeitungseinheit zur Verarbeitung der Positionssignale in absolute, digitale Positionswerte,
- eine Schnittstelleneinheit zur Kommunikation mit einer Folgeelektronik,
wobei die Positionsmesseinrichtung weiter umfasst
- wenigstens eine zweite Abtasteinheit zur Erzeugung von Messsignalen, die von einer Position eines Maschinenteils abhängig sind, durch Abtastung eines Messziels auf dem Maschinenteil,
- eine Auswerteeinheit zur Verarbeitung der Messsignale in wenigstens einen Messwert, der eine Position oder/und eine Positionsänderung des Messziels bezogen auf die zweite Abtasteinheit angibt und zur Ausgabe des wenigstens einen Messwerts an die Schnittstelleneinheit.

Weiter ist es eine Aufgabe der vorliegenden Erfindung, ein Verfahren anzugeben, mit der die Position eines Maschinenteils im Umfeld einer Positionsmesseinrichtung mit geringem Zusatzaufwand messbar ist.

Diese Aufgabe wird gelöst durch ein Verfahren nach Anspruch 7.

Hierzu wird ein Verfahren zum Betreiben einer Positionsmesseinrichtung vorgeschlagen, umfassend
- einen Teilungsträger, der drehfest mit einer Welle verbunden wird, mit einer Messteilung, die im montierten Zustand des Teilungsträgers radial um eine Drehachse der Welle angeordnet ist,
- eine Abtasteinheit, mit der Positionssignale durch Abtastung der Messteilung erzeugt werden,
- eine Positionsverarbeitungseinheit, in der die Positionssignale zu absoluten, digitalen Positionswerten verarbeitet werden,
- eine Schnittstelleneinheit, zur Kommunikation mit einer Folgeelektronik, wobei die Positionsmesseinrichtung weiter umfasst
- wenigstens eine zweite Abtasteinheit, mit der durch Abtastung eines Messziels auf dem Maschinenteil Messsignale erzeugt werden, die von einer Position eines Maschinenteils abhängig sind,
- eine Auswerteeinheit mit der die Messsignale zu wenigstens einem Messwert verarbeitet werden, der eine Position oder/und eine Positionsänderung des Messziels bezogen auf die zweite Abtasteinheit angibt und zur Ausgabe des wenigstens einen Messwerts an die Schnittstelleneinheit.

Vorteilhafte Ausgestaltungen der vorliegenden Erfindung ergeben sich aus den von den Ansprüchen 1 und 7 8- abhängigen Ansprüchen, sowie aus der nachfolgenden Beschreibung der Ausführungsbeispiele.

### KURZE BESCHREIBUNG DER ZEICHNUNGEN

Es zeigt
- Figur 1: ein Blockdiagramm einer erfindungsgemäßen Positionsmesseinrichtung,
- Figur 2: ein erstes Ausführungsbeispiel einer erfindungsgemäßen Positionsmesseinrichtung,
- Figur 3: ein weiteres Ausführungsbeispiel einer erfindungsgemäßen Positionsmesseinrichtung,
- Figur 4: ein Trägerelement für Abtasteinheiten einer vorteilhaften Ausführungsform,
- Figur 5: ein Blockdiagramm einer erfindungsgemäßen Positionsmesseinrichtung mit einem Trägerelement nach Figur 4,
- Figur 6: ein alternatives Trägerelement für Abtasteinheiten einer vorteilhaften Ausführungsform und
- Figur 7: ein Blockdiagramm einer erfindungsgemäßen Positionsmesseinrichtung mit einem Trägerelement nach Figur 6.

### BESCHREIBUNG DER AUSFÜHRUNGSFORMEN

In der folgenden Beschreibung vorteilhafter Ausführungsformen werden Bezugszeichen von Komponenten, die in einer Figur eingeführt und beschrieben werden, in anderen Figuren beibehalten. Gegebenenfalls werden die Bezugszeichen um eine Nummer ergänzt, wenn sie mehrfach vorkommen, aber die gleiche Funktion erfüllen.

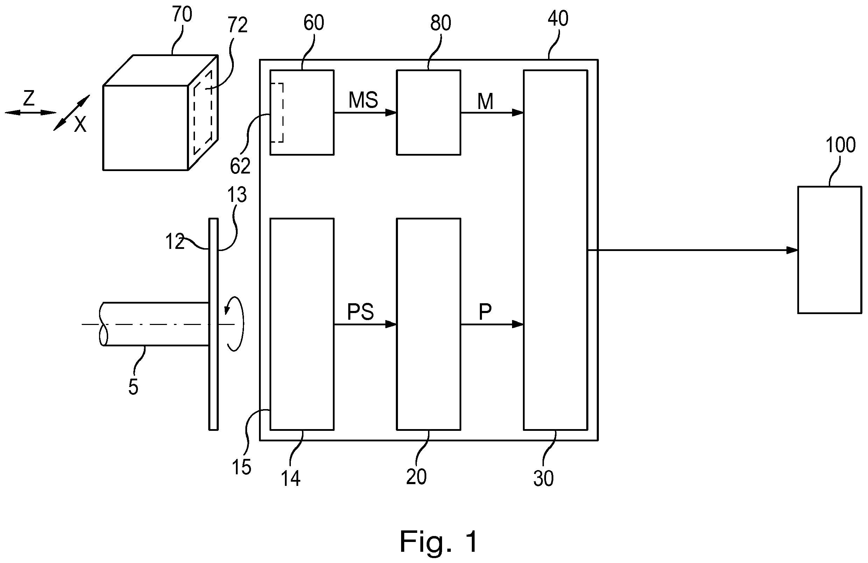

Figur 1 zeigt ein Blockdiagramm einer erfindungsgemäßen Positionsmesseinrichtung. Sie umfasst zur Ausführung ihrer Grundfunktion, der Bestimmung der Winkelstellung und/oder der Anzahl zurückgelegter Umdrehungen einer Welle 5, einen Teilungsträger 12 mit einer Messteilung 13, eine Abtasteinheit 14 mit Sensorelementen 15, eine Positionsverarbeitungseinheit 20, sowie eine Schnittstelleneinheit 30.

Der Teilungsträger 12 ist scheiben- oder ringförmig ausgeführt und die Messteilung 13 ist radial um einen Drehpunkt der Scheibe angeordnet. Der Teilungsträger 12 ist für den Betrieb der Positionsmesseinrichtung drehfest mit der Welle 5 verbunden, so dass die Messteilung 13 mit der Welle 5 rotiert.

Die Welle 5 kann Bestandteil der Positionsmesseinrichtung sein und in der jeweiligen Applikation über eine geeignete mechanische Kupplung mit einer Maschinenwelle (Motorwelle) verbunden werden. Bei der Welle 5 kann es sich aber auch bereits um die Maschinenwelle (Motorwelle) handeln, deren Winkelposition und/oder Umdrehungszahl gemessen werden soll. In diesem Fall ist die Welle kein Bestandteil der Positionsmesseinrichtung.

Die Abtasteinheit 14 ist dem Teilungsträger 12 zur Abtastung der Messteilung 13 gegenüberliegend angeordnet. Das Grundprinzip der Positionsmessung basiert auf der winkelabhängigen Variation einer physikalischen Größe oder Eigenschaft durch die Messteilung 13. Die Detektion erfolgt durch die Sensorelemente 15, die entsprechend dem physikalischen Abtastprinzip ausgeführt sind. So handelt es sich bei einem optischen Abtastprinzip bei den Sensorelementen 15 um Photodetektoren, bei einem induktiven Abtastprinzip um Empfängerspulen, bei einem magnetischen Abtastprinzip um Magnetfeldsensoren (Hall-Sensoren, MR-Sensoren,...) und bei einem kapazitiven Abtastprinzip beispielsweise um Kondensatorelektroden. Aus der Abtastung der Messteilung 13 mit den Sensorelementen 15 resultieren Positionssignale PS, die eine Information über die Winkelstellung der Welle 5 enthalten. Die Positionssignale PS sind der Positionsverarbeitungseinheit 20 zugeführt und werden dort zu absoluten, digitalen Positionswerten (Winkelwerten) P verarbeitet.

Die Positionswerte P sind der Schnittstelleneinheit 30 zugeführt. Die Schnittstelleneinheit 30 ist eine digitale Datenschnittstelle, insbesondere eine serielle Schnittstelle, die eine Kommunikation der Positionsmesseinrichtung mit einer Folgeelektronik 100 ermöglicht. Hierzu ist die Schnittstelleneinheit 30 mit einer korrespondierenden Schnittstelle der Folgeelektronik 100 verbindbar. Mit Vorteil ist die Schnittstelleneinheit 30 als bidirektionale Schnittstelle ausgeführt, so dass Befehle und gegebenenfalls Daten von der Folgeelektronik 100 zur Positionsmesseinrichtung, und von der Positionsmesseinrichtung gemessene Daten zur Folgeelektronik 100 übertragbar sind.

Für die Positionsmessung können verschiedene, einem Fachmann bekannte physikalische Messprinzipien zum Einsatz kommen, beispielsweise optische, induktive, magnetische, oder kapazitive.

Erfindungsgemäß umfasst die Positionsmesseinrichtung weiter wenigstens eine zweite Abtasteinheit 60 und eine Auswerteeinheit 80.

Die zweite Abtasteinheit 60 ist ausgestaltet zur Erzeugung von Messsignalen MS, die von einer Position eines Maschinenteils 70 abhängig sind. Die Erfassung der Messsignale MS erfolgt durch die Abtastung eines Messziels 72 auf dem Maschinenteil 70 mit geeigneten Sensorelementen 62. Als Messziel 72 kann das Maschinenteil 70 selbst, insbesondere eine physikalische Eigenschaft der der zweiten Abtasteinheit 60 zugewandten Seite des Maschinenteils 70 genutzt werden. Wie später gezeigt werden wird, ergeben sich vorteilhafte Ausführungen der vorliegenden Erfindung, wenn als Messziel 72 ein separates Element zum Einsatz kommt, das auf der der zweiten Abtasteinheit 60 zugewandten Seite des Maschinenteils 70 angeordnet ist.

Für die Abtastung können beliebige physikalische Abtastprinzipien zum Einsatz kommen, insbesondere optische, magnetische, induktive oder kapazitive. Das gewählte Abtastprinzip bestimmt die Ausgestaltung des Messziels 72 und der zweiten Abtasteinheit 60.

Im Folgenden wird als "Abtasteinheit" immer diejenige funktionale Einheit bezeichnet, auf der die Sensorelemente zur Detektion einer positionsabhängigen Änderung der vom physikalischen Abtastprinzip bestimmten Größe angeordnet sind. Darüber hinaus können Abtasteinheiten auch die Komponenten umfassen, die der Erzeugung dieser Größe dienen.

Kommt beispielsweise ein optisches Abtastprinzip zum Einsatz, so umfasst die zweite Abtasteinheit 60 als Sensorelement 62 einen Photodetektor (Photodiode), der vom Messziel 72 reflektiertes Licht detektiert. Das Licht wird von einer Lichtquelle (LED oder Laserdiode) in Richtung des Messziels 72 ausgesendet. Das Messziel 72 weist in diesem Fall lichtreflektierende Eigenschaften auf.

Verwendet man ein magnetisches Abtastprinzip, so weist das Messziel 72 wenigstens einen magnetischen Bereich auf, dessen Magnetfeld seitens der zweiten Abtasteinheit 60 mittels eines Magnetfeldsensors (Hall-Element oder MR-Sensor) als Sensorelement 62 festgestellt wird.

Bei einem induktiven Messprinzip erzeugt die zweite Abtasteinheit 60 mittels einer Erregerspule ein elektromagnetisches Feld, das in einer Detektorspule, die als Sensorelement 62 zum Einsatz kommt, eine Spannung induziert. In diesem Fall weist das Messziel 72 feldschwächende Eigenschaften auf, die das elektromagnetische Feld und damit die Amplitude der in der Detektorspule induzierten Spannung beeinflussen.

Das kapazitive Messprinzip basiert darauf, dass aus Messziel 72 und geeigneten Elementen der zweiten Abtasteinheit 60 ein Kondensator gebildet wird, der als Sensorelement 62 dient, dessen Kapazität von der Position des Messziels 72 in Bezug auf die zweite Abtasteinheit 60 bestimmt ist.

Unabhängig von Messprinzip ist festzustellen, dass Messsignale MS, die aus der Abtastung des Messziels 72 durch die zweite Abtasteinheit 60 resultieren, von der Position des Messziels 72 bezogen auf die zweite Abtasteinheit 60 abhängig sind. Das gilt insbesondere für den Abstand zwischen Messziel 72 und zweiter Abtasteinheit 60.

Die Messsignale MS sind der Auswerteeinheit 80 zugeführt und werden dort zu digitalen Messwerten M verarbeitet. Ist, wie in Figur 1 dargestellt, das Maschinenteil 70 mit dem Messziel 72 bezogen auf die zweite Abtasteinheit 60 in einer Messrichtung Z beweglich angeordnet, so geben die digitalen Messwerte M die Position (den Abstand) oder/und Positionsänderungen (Abstandsänderungen) des Messziels 72 bezogen auf die zweite Abtasteinheit 60 an.

Alternativ oder zusätzlich zu einer Positionsmessung in Richtung Z, die in diesem Beispiel in Achsrichtung der Welle 5 verläuft, können auch Positionen oder/und Positionsänderungen in anderen Raumrichtungen gemessen werden, beispielsweise in einer Querrichtung X, die senkrecht zur Richtung Z angeordnet ist. Bewegungen in der Querrichtung X entsprechen somit einer parallelen Verschiebung des Maschinenteils 70 bezogen auf die zweite Abtasteinheit 60. Entsprechend geben die Messwerte M Verschiebungen des Messziels 72 in der Querrichtung X an. Bei den Bewegungen in der Querrichtung X kann es sich um geradlinige Bewegungen, oder um Bewegungen, die einer Kreisbahn folgen, handeln. Somit geben die Messwerte M eine Länge oder einen Winkel an.

Zur Aufnahme der Abtasteinheit 14, der zweiten Abtasteinheit 60 und der elektronischen Module wie Positionsverarbeitungseinheit 20, Schnittstelleneinheit 30 und Auswerteeinheit 80 ist ein Gehäuse 40 vorgesehen.

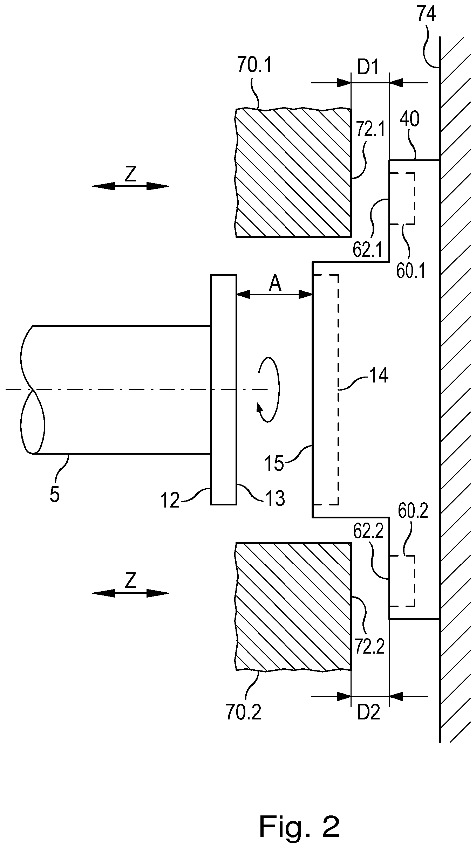

Figur 2 zeigt ein erstes Ausführungsbeispiel einer erfindungsgemäßen Positionsmesseinrichtung im angebauten Zustand, d.h. der Teilungsträger 12 ist drehfest mit der Welle 5 verbunden und das Gehäuse 40 der Positionsmesseinrichtung ist an einer feststehenden Maschinenkomponente 74 befestigt, beispielsweise durch eine Schraubverbindung. Im Gehäuse 40 ist in bekannter Weise auf der dem Teilungsträger 12 zugewandten Seite die Abtasteinheit 14 zur Abtastung der Messteilung 13 angeordnet. Weiter sind zwei zweite Abtasteinheiten 60.1, 60.2 vorgesehen, die Messwerte M ermitteln, die jeweils den Abstand D1, D2 zu ihnen zugeordneten Maschinenteilen 70.1, 70.2 in Richtung Z angeben. Die Messung erfolgt durch Abtastung von Messzielen 72.1, 72.2 auf den Maschinenteilen 70.1, 70.2.

Weiter sind im Gehäuse 40 die elektronischen Module wie die Positionsverarbeitungseinheit 20, die Schnittstelleneinheit 30 und die Auswerteeinheit 80 angeordnet (nicht dargestellt). Hierfür kann eine separate Leiterplatte vorgesehen sein, im Fall, dass die Abtasteinheit 14 und/oder die zweiten Abtasteinheiten 60.1, 60.2 bereits Leiterplatten umfassen, können diese Module aber auch dort angeordnet sein. Darüber hinaus können im oder am Gehäuse 40 Steckverbinder, Anschlußklemmen, etc. vorgesehen sein.

Bei der Maschine, in die die Positionsmesseinrichtung eingebaut ist, kann es sich beispielsweise um einen Elektromotor mit einer integrierten elektromagnetischen Motorbremse handeln. In diesem Fall ist die feststehende Maschinenkomponente 74 beispielsweise ein Teil des Motorgehäuses oder eines Gehäuserahmens, bei der Welle 5 handelt es sich um die Motorwelle des Elektromotors und die Maschinenteile 70.1, 70.2 sind Teile der elektromagnetischen Motorbremse, die zum Zwecke der Aktivierung bzw. Deaktivierung (Lüftung) der Bremse in der Bewegungsrichtung Z bewegt werden. Aus den Abständen D1, D2 lassen sich Rückschlüsse auf die Funktion der Motorbremse ziehen, beispielsweise ob die Motorbremse aktiviert oder deaktiviert (gelüftet) ist. Außerdem ermöglicht die Überwachung der Abstände D1, D2 eine Aussage über den Verschleißzustand von Bremsbelägen. Bei den Maschinenteilen 70.1, 70.2 kann es sich um separate Komponenten oder um Bereiche einer einzigen, ringförmigen, Komponente (beispielsweise die Ankerscheibe einer Motorbremse) handeln.

Bezogen auf die Messung des Drehwinkels, bzw. der Anzahl der zurückgelegten Umdrehungen der Welle 5 ist diese Anordnung besonders vorteilhaft, da der Abtastabstand A (der Abstand zwischen den Sensorelementen 15 der Abtasteinheit 14 und der Messteilung 13 auf dem Teilungsträger 12) weitgehend konstant ist und die Positionssignale PS, die aus der Abtastung der Messteilung 13 resultieren, daher praktisch nur von der Drehbewegung der Welle 5 abhängig sind.

Die Abtasteinheit 14 und die zweiten Abtasteinheiten 60.1, 60.2 sind in diesem Ausführungsbeispiel voneinander unabhängig, d.h. sie können auf unterschiedlichen Abtastprinzipien basieren.

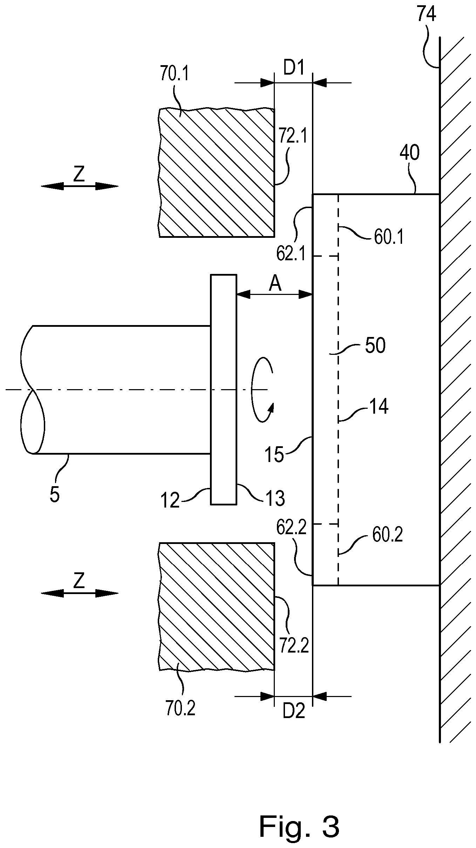

Figur 3 zeigt ein weiteres Ausführungsbeispiel einer erfindungsgemäßen Positionsmesseinrichtung im angebauten Zustand. Komponenten, die bereits im Zusammenhang mit den vorhergehenden Figuren beschrieben wurden, tragen das gleiche Bezugszeichen. Abweichend zum vorhergehenden Ausführungsbeispiel sind die Abtasteinheit 14 und die zweiten Abtasteinheiten 60.1, 60.2 zusammen auf einem gemeinsamen Trägerelement 50 angeordnet. Das Trägerelement 50 ist mit Vorteil eine Leiterplatte.

Diese Ausführungsform ist besonders vorteilhaft, wenn sowohl bei der Abtasteinheit 14, als auch bei den zweiten Abtasteinheiten 60.1, 60.2, ein induktives Abtastprinzip zum Einsatz kommt, da hier die Sensorelemente 15, 62.1, 62.2 Spulen (Empfängerspulen) sind und auch zur Erzeugung des elektromagnetischen Wechselfeldes Spulen (Erregerspulen) benötigt werden. Spulen können auf Leiterplatten, insbesondere auf mehrlagigen Leiterplatten, auf preisgünstige und einfache Weise hergestellt werden. Zusätzlich können auf dem Trägerelement 50 weitere Komponenten der elektrischen Schaltung der Abtasteinheiten 14, 60.1, 60.2, sowie ggf. der Positionsverarbeitungseinheit 20, der Schnittstelleneinheit 30 und der Auswerteeinheit 80 angeordnet sein, so dass lediglich eine einzige Leiterplatte benötigt wird.

Weiter ist es vorteilhaft, die Außenkonturen des Trägerelements 50 so zu gestalten, dass es als Deckel für das Gehäuse 40 dienen kann.

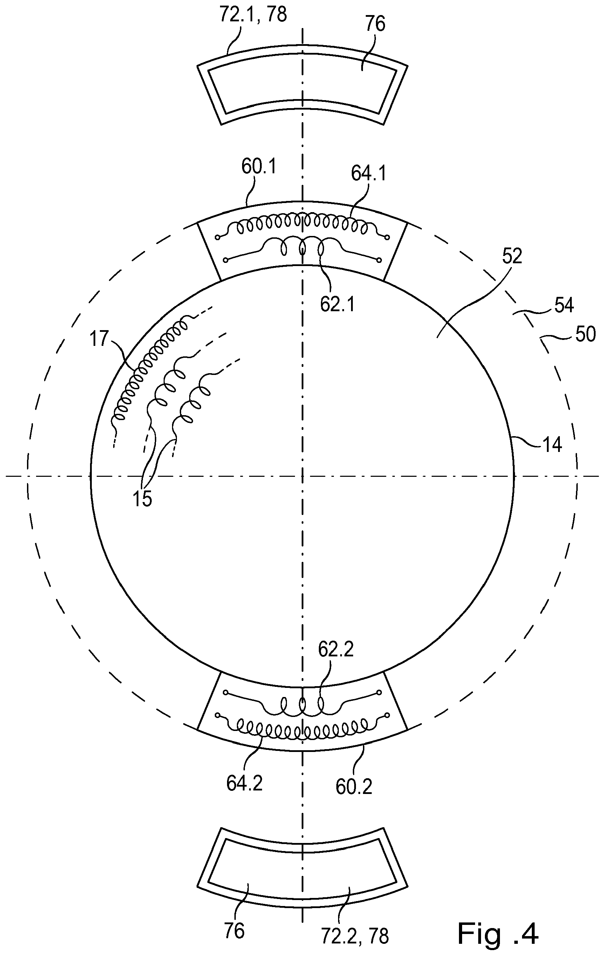

Figur 4 zeigt einen vorteilhaften Aufbau eines Trägerelements 50 mit korrespondierenden Messzielen 72.1, 72.2 bei einem induktiven Messprinzip.

Das Trägerelement 50 umfasst einen inneren Bereich 52, in dem die Abtasteinheit 14 angeordnet ist, und einen äußeren Bereich 54 mit zwei zweiten Abtasteinheiten 60.1, 60.2.

Im inneren Bereich 52 sind eine Mehrzahl von Sensorelementen 15 in Form von Empfängerspulen, sowie eine Erregerspule 17 angeordnet. Mittels der Erregerspule 17 (in Verbindung mit einer nicht dargestellten Erregereinheit) wird ein elektromagnetisches Wechselfeld erzeugt, das abhängig von der Winkelstellung der Welle 5, bzw. der Winkelstellung des mit der Welle 5 verbundenen Teilungsträgers 12 mit Messteilung 13 (nicht dargestellt), abgeschwächt wird. Entsprechend variiert die in den Empfängerspulen 15 induzierte Spannung drehwinkelabhängig, so dass eine Positionsbestimmung möglich ist. Insofern entspricht der innere Bereich 52 des Trägerelements 50 dem in der DE 197 51 853 A1 beschriebenen Trägerelement.

Die zweiten Abtasteinheiten 60.1, 60.2 im äußeren Bereich 54 des Trägerelements 50 umfassen Sensorelemente 62.1, 62.2 mit jeweils einer Empfängerspule zur Detektion eines elektromagnetischen Wechselfeldes. Die Empfängerspulen erstrecken sich die hier nicht notwendigerweise über die vollen 360° der Kreisscheibe, sondern nur auf den Bereich, der zur Erfassung der Position des zu messenden Messziels 72.1, 72.2 erforderlich ist. Bei zwei Abtasteinheiten 60.1, 60.2 umfassen diese beispielsweise jeweils ein Ringsegment mit einem Winkelbereich von weniger als 180°, insbesondere weniger als 90°. Die Außenkonturen des Trägerelements 50 können den mechanischen Anforderungen des Gehäuses 40 angepasst sein. Wie durch die gestrichelten Linien angedeutet, ist das Trägerelement 50 beispielsweise kreisscheibenförmig.

Das von den zweiten Abtasteinheiten 60.1, 60.2 zu detektierende elektromagnetische Wechselfeld kann auf wenigstens drei verschiedene Weisen generiert werden:
1. Als zu detektierendes Wechselfeld dient das im inneren Bereich 52 erzeugte Wechselfeld, das sich über den Rand des inneren Bereichs 52 hinaus auf den äußeren Bereich 54 erstreckt.
2. Auf den zweiten Abtasteinheiten 60.1 60.2 sind Erregerspulen 64.1, 64.2 angeordnet, die mit den Erregerspulen des inneren Bereichs 52 in Reihe geschaltet sind. Auf diese Weise wird die felderzeugende Schaltung auf den äußeren Bereich 54 erweitert.
3. Auf den zweiten Abtasteinheiten 60.1, 60.2 sind Erregerspulen 64.1, 64.2 angeordnet, die von einer separaten Erregereinheit zur Erzeugung des elektromagnetischen Wechselfeldes angesteuert werden.

Entsprechend dem induktiven Messprinzip weisen die Messziele 72.1, 72.2 feldschwächende Eigenschaften auf. In diesem Ausführungsbeispiel sind die Messziele 72.1, 72.2 durch leitfähige Bereiche 76 gebildet, die auf einem Trägerelement 78 angeordnet sind, bei dem es sich, analog zum Trägerelement 50, um eine Leiterplatte handeln kann. Die leitfähigen Bereiche 76 sind beispielsweise durch Kupferflächen gebildet. Die Messziele 72.1, 72.2 werden auf geeignete Weise mit den Maschinenteilen 70.1, 70.2 verbunden, beispielsweise durch eine Klebe- oder Schraubverbindung.

Durch die Anordnung der Messziele 72.1, 72.2 als separate Trägerelemente 78 erreicht man eine weitgehende Unabhängigkeit von Material und Beschaffenheit des Maschinenteils 72.1, 72.2. Außerdem können verschiedene Messziele 72.1, 72.2 eingesetzt werden, die unterschiedliche Messungen von Positionen oder/und Positionsänderungen zwischen Messziel 72.1, 72.2 und zweiter Abtasteinheit 60.1, 60.2 erlauben.

Gemäß der Darstellung der Figuren 1 bis 3 sind die zweiten Abtasteinheiten 60.1, 60.2 und die korrespondierenden Messziele 72.1, 72.2 im angebauten Zustand gegenüberliegend angeordnet.

In diesem Ausführungsbeispiel sind die Messsignale MS die in den Sensorelementen 62.1, 62.2 induzierten Spannungen.

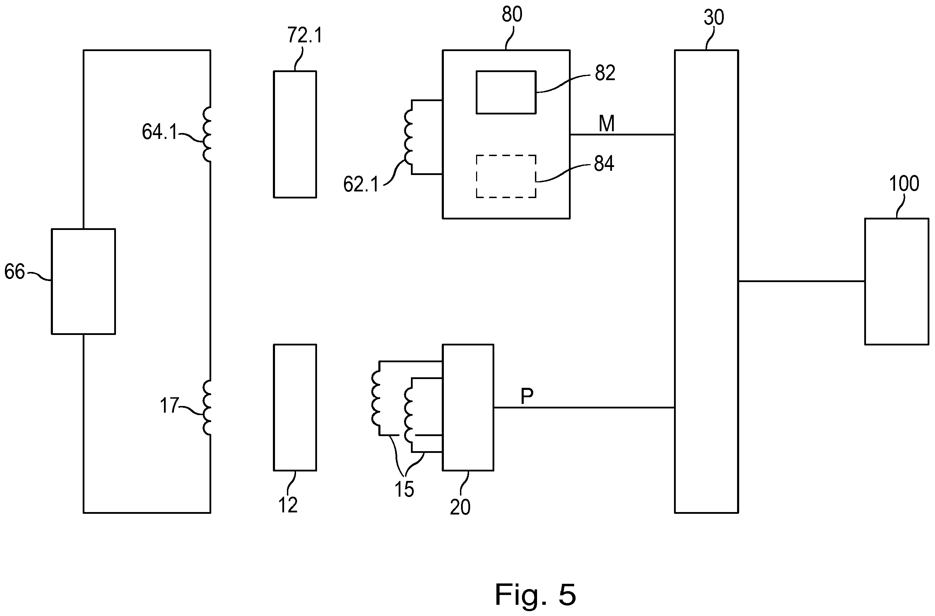

Figur 5 zeigt ein Blockdiagramm einer erfindungsgemäßen Positionsmesseinrichtung mit einem Trägerelement gemäß Figur 4. Um die Darstellung zu vereinfachen, ist nur eine zweite Abtasteinheit 60.1 dargestellt, die Schaltung kann aber einfach auf zwei oder mehrere zweite Abtasteinheiten erweitert werden.

Die felderzeugende Schaltung umfasst die Erregerspule 17 im inneren Bereich 52, die mit der Erregerspule 64.1 der zweiten Abtasteinheit 60.1 in Reihe geschaltet ist, sowie eine Erregereinheit 66, die mit den Erregerspulen 17, 64.1 einen Schwingkreis bildet. Die Erregereinheit 66 ist geeignet ausgestaltet, dass sie den Schwingkreis periodisch oder gepulst erregt und so eine Schwingung generiert. Um den Schwingkreis zu bilden, umfasst die Erregereinheit 66 einen Kondensator, zur Erregung des Schwingkreises ein Schaltelement.

Das elektromagnetische Wechselfeld wird durch den Teilungsträger 12 (mit nicht dargestellter Messteilung 13), soweit es die Bestimmung des Drehwinkels der Welle 5 betrifft und das Messziel 72.1, soweit es die Bestimmung der Position des Maschinenteils 70.1 betrifft, positionsabhängig abgeschwächt, was wiederum die in den Sensorelementen 15 und 62.1 induzierten Spannungen moduliert.

Die Positionsverarbeitungseinheit 20 verarbeitet in bekannter Weise die in den Sensorelementen 15 induzierten Spannungen in Positionswerte P, die die Winkelstellung der Welle 5 angeben.

Der Auswerteeinheit 80 ist als Messsignal die im Sensorelement 62.1 induzierte Spannung zugeführt. Sie umfasst eine erste Signalverarbeitungseinheit 82, die das Messsignal zu einem Messwert M verarbeitet, der den Abstand D1 zwischen dem Messziel 72.1 (und somit dem Maschinenteil 70.1) und der zweiten Abtasteinheit 60.1 angibt.

Weiter kann die Auswerteeinheit 80 eine zweite Signalverarbeitungseinheit 84 umfassen, die weiterführende Auswertungen des Messsignals durchführt, beispielsweise eine Auswertung im Frequenzbereich durch geeignete Filterverfahren oder eine Frequenzanalyse (Fourieranalyse, etc.). Hierdurch können weitere Messwerte M gewonnen werden, beispielsweise Messwerte M, die Kenngrößen für Vibrationen (Amplitude und/oder Frequenz) des Messziels 72.1 in Bezug auf die zweite Abtasteinheit 60.1 angeben. Vibrationen sind im Sinne der vorliegenden Erfindung als Positionsänderungen zu betrachten.

Als erster Verarbeitungsschritt, bevor die Messsignale den Signalverarbeitungseinheiten 82, 84 zugeführt werden, kann in der Auswerteeinheit eine Demodulation vorgenommen werden, um die Signalanteile mit der Grundfrequenz des elektromagnetischen Wechselfeldes (Trägerfrequenz) zu entfernen.

Die Messwerte M sind der Schnittstelleneinheit 30 zugeführt und können von dieser weiter an die Folgeelektronik 100 ausgegeben werden.

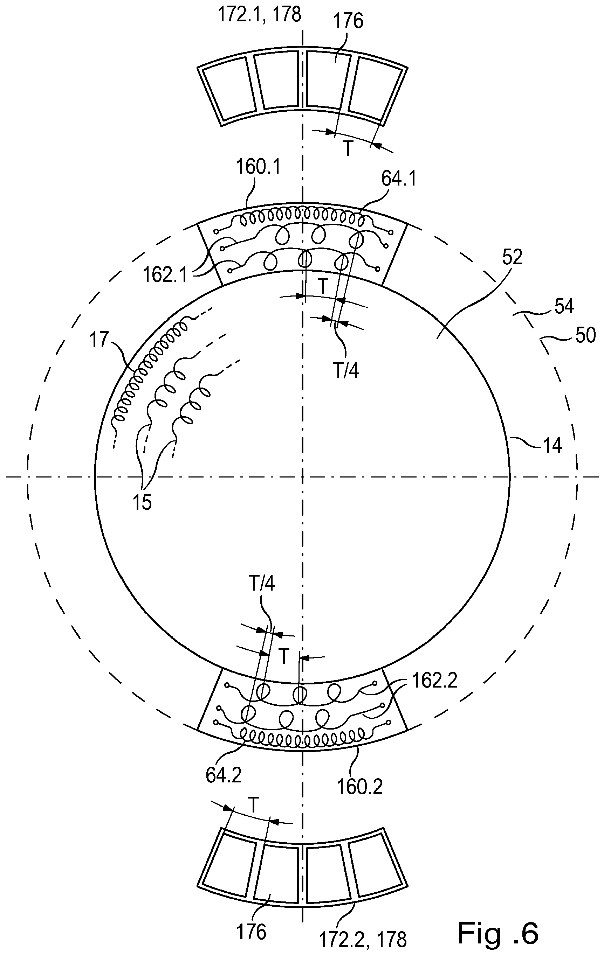

Figur 6 zeigt einen weiteren vorteilhaften Aufbau eines Trägerelements 50 mit korrespondierenden Messzielen 172.1, 172.2 bei einem induktiven Messprinzip.

Der innere Bereich 52 entspricht dem inneren Bereich der Ausführungsform von Figur 4, im äußeren Bereich 54 sind weiterhin zwei zweite Abtasteinheiten 160.1, 160.2 angeordnet.

In diesem Ausführungsbeispiel umfassen die Sensorelemente 162.1, 162.2 der zweiten Abtasteinheiten 160.1, 160.2 jedoch jeweils zwei Empfängerspulen zur Detektion eines elektromagnetischen Wechselfeldes.

Die Messziele 172.1, 172.2 sind als Messteilungssegmente ausgestaltet, d.h. sie weisen eine regelmäßige Abfolge von elektrisch leitfähigen Bereichen 176 auf, die auf einem Trägerelement 178 angeordnet sind.

Die Anordnung der leitfähigen Bereiche 176 der Messteilungssegmente der Messziele 172.1, 172.2 und der Leiterschleifen der Empfängerspulen der Sensorelemente 162.1, 162.2 weisen die gleiche Teilungsperiode T auf und folgen der Querrichtung X, die einer Kreisbahn um den Mittelpunkt des Trägerelements 50 (entsprechend dem Drehpunkt der Welle 5) entspricht. Außerdem sind die zwei Empfängerspulen je Sensorelement 162.1, 162.2 in der Messrichtung der Messteilungssegmente (Umfangsrichtung) um eine viertel Teilungsperiode T versetzt angeordnet. Verschiebungen der Messziele 172.1, 172.2 gegenüber den Sensorelementen 162.1, 162.2 in der Messrichtung der Messteilungssegmente (der Querrichtung X) führen zu einer Modulation der in den Empfängerspulen induzierten Spannungen. Durch geeignete Ausgestaltung der Leiterschleifen der Empfängerspulen ist die Modulation je Teilungsperiode T weitgehend sinusförmig und durch die versetzte Anordnung der zwei Empfängerspulen weisen die induzierten Spannungen eine Phasenverschiebung von 90° auf.

Diese Ausgestaltung der Messziele 172.1, 172.2 in Verbindung mit den zweiten Abtasteinheiten 160.1, 160.2 ist deshalb besonders vorteilhaft, weil Bewegungen des zu messenden Maschinenteils 70.1, 70.2 in Richtung Z die Amplituden der in den Empfängerspulen induzierten Spannungen gleichermaßen beeinflussen, wohingegen bei Bewegungen in der Querrichtung X die Amplituden der induzierten Spannungen einsprechend dem sinusförmigen Verlauf folgen. Das bedeutet, dass die unterschiedlichen Bewegungsrichtungen unterscheidbar sind.

Eine Applikation, bei der Bewegungen in Richtung Z und in Querrichtung X auftreten können, ist die oben bereits erwähnte Motorbremse. Neben der Bewegung in Richtung Z zum Aktivieren oder Lösen der Bremse kommt es beim Bremsvorgang durch die auftretende Reibung zu einer Kraft in radialer Richtung (Umfangsrichtung), die zu einer Änderung der Position des Maschinenteils, das mit der Positionsmesseinrichtung gemessen wird, führen kann. Eine Messung dieser Positionsänderung erlaubt eine Beurteilung des mechanischen Zustands der Bremse.

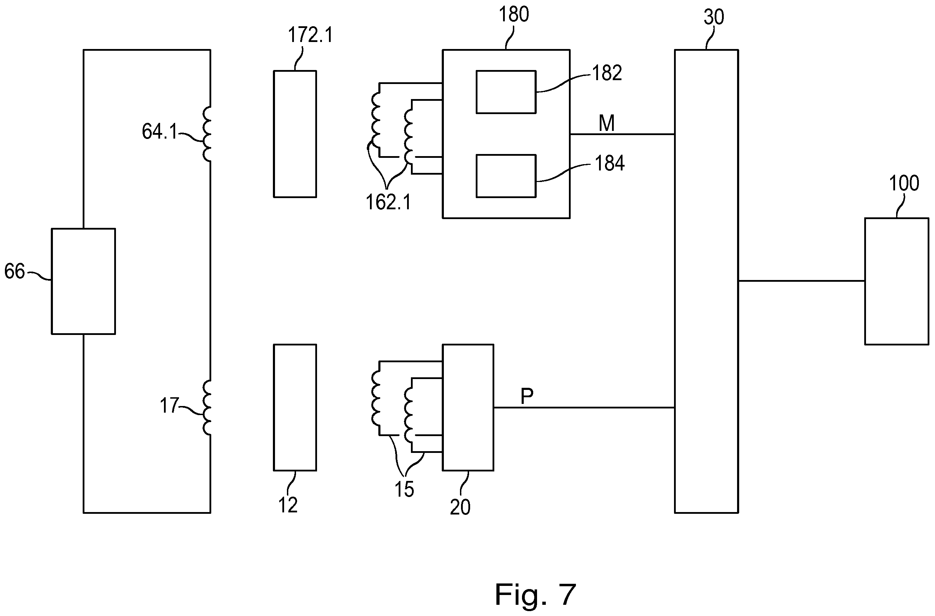

Figur 7 zeigt ein Blockdiagramm einer erfindungsgemäßen Positionsmesseinrichtung mit einem Trägerelement gemäß Figur 6. Es ist wiederum nur eine zweite Abtasteinheit 160.1 dargestellt.

Abweichend zu Figur 5 sind nun zwei um 90° versetzt angeordnete Sensorelemente 162.1 vorgesehen, die in ihnen induzierten Spannungen sind als Messsignale der Auswerteeinheit 180 zugeführt.

Die Auswerteeinheit 180 weist eine erste Signalverarbeitungseinheit 182 auf, die die Messsignale in Bezug auf die Position in Richtung Z auswertet, sowie eine zweite Signalverarbeitungseinheit 184, die die Messsignale in Bezug auf Positionsänderungen in der Querrichtung X auswertet. Auch hier wird zuerst eine Demodulation vorgenommen, so dass die Messsignale als Sinus- und Kosinussignale vorliegen. Für die weitere Auswertung können diese als Real- und Imaginärteil einer komplexen Zahl betrachtet werden. Demzufolge ermittelt die erste Signalverarbeitungseinheit 182 den Betrag dieser komplexen Zahl, der ein Maß für den Abstand D1 zwischen dem Messziel 172.1 und der zweiten Abtasteinheit 160.1 in Richtung Z darstellt, als einen Messwert M. Die zweite Signalverarbeitungseinheit 184 ermittelt den Phasenwinkel der komplexen Zahl, der eine Position des Messziels 172.1 bezogen auf die Abtasteinheit 160.1 in der Querrichtung X angibt, als einen Messwert M.

Darüber hinaus können in der zweiten Signalverarbeitungseinheit 184 durch Auswertung der Messsignale im Frequenzbereich durch geeignete Filterverfahren oder eine Frequenzanalyse (Fourieranalyse, etc.) weitere Messwerte M ermittelt werden, die Vibrationen (Amplitude und/oder Frequenz) des Messziels 72.1 angeben, insbesondere Vibrationen in Querrichtung X.

Auch hier kann das obige Beispiel einer Motorbremse herangezogen werden, da es insbesondere während des Bremsvorgangs zu Vibrationen in Querrichtung X kommen kann.

Die vorliegende Erfindung ist selbstverständlich nicht auf die beschriebenen Ausführungsformen eingeschränkt, sondern kann von einem Fachmann im Rahmen der Patentansprüche für verschiedenste Messaufgaben abgewandelt werden.

## Patentansprüche

1. Positionsmesseinrichtung, umfassend
• einen Teilungsträger (12), der drehfest mit einer Welle (5) verbindbar ist, mit einer Messteilung (13), die im montierten Zustand des Teilungsträgers (12) radial um eine Drehachse der Welle (5) angeordnet ist,
• eine Abtasteinheit (14) mit Sensorelementen (15), zur Erzeugung von Positionssignalen (PS) durch Abtastung der Messteilung (13), wobei die Sensorelemente (15) und die Messteilung (13) in einem weitgehend konstanten Abtastabstand (A) zueinander angeordnet sind,
• eine Positionsverarbeitungseinheit (20) zur Verarbeitung der Positionssignale (PS) in absolute, digitale Positionswerte (P),
• eine Schnittstelleneinheit (30) zur Kommunikation mit einer Folgeelektronik (100),
wobei die Positionsmesseinrichtung weiter umfasst
• wenigstens eine zweite Abtasteinheit (60, 60.1, 60.2, 160.1, 160.2) zur Erzeugung von Messsignalen (MS), die von einer Position eines von der Welle (5) verschiedenen Maschinenteils (70, 70.1, 70.2) abhängig sind, durch Abtastung eines Messziels (72, 72.1, 72.2, 172.1, 172.2) auf dem Maschinenteil (70, 70.1, 70.2),
• eine Auswerteeinheit (80, 180) zur Verarbeitung der Messsignale (MS) in wenigstens einen Messwert (M), der eine Position oder/und eine Positionsänderung des Messziels (72, 72.1, 72.2, 172.1, 172.2) bezogen auf die zweite Abtasteinheit (60, 60.1, 60.2, 160.1, 160.2) angibt und zur Ausgabe des wenigstens einen Messwerts (M) an die Schnittstelleneinheit (30) und
• ein Gehäuse (40) zur Aufnahme der Abtasteinheit (14), der zweiten Abtasteinheit (60, 60.1, 60.2, 160.1, 160.2) und der elektronischen Module wie Positionsverarbeitungseinheit (20), Schnittstelleneinheit (30) und Auswerteeinheit (80, 180),
wobei sich der Teilungsträger (12) und das Messziel (72) außerhalb des Gehäuses befinden,
wobei die Positionsmesseinrichtung außerdem das Messziel (72) umfasst.

2. Positionsmesseinrichtung nach Anspruch 1, wobei der in der Auswerteeinheit (80, 180) ermittelte Messwert (M)
• den Abstand (D1, D2) zwischen dem Messziel (72, 72.1, 72.2, 172.1, 172.2) und der zweiten Abtasteinheit (60, 60.1, 60.2, 160.1, 160.2) in einer Richtung (Z), die in Achsrichtung der Welle (5) verläuft, oder/und
• eine Parallelverschiebung des Messziels (72, 72.1, 72.2, 172.1, 172.2) in einer Querrichtung (X), die senkrecht zur Richtung (Z) angeordnet ist, oder/und
• Kenngrößen für Vibrationen des Messziels (72, 72.1, 72.2, 172.1, 172.2) bezogen auf die zweite Abtasteinheit (60, 60.1, 60.2, 160.1, 160.2)
angibt.

3. Positionsmesseinrichtung nach einem der vorhergehenden Ansprüche, wobei die Abtasteinheit (14) und die zweite Abtasteinheit (60, 60.1, 60.2, 160.1, 160.2) zusammen auf einem gemeinsamen Trägerelement (50) innerhalb des Gehäuses (40) angeordnet sind,
wobei die Positionsmesseinrichtung ebenfalls das Trägerelement (50) umfasst.

4. Positionsmesseinrichtung nach Anspruch 3, wobei die Abtasteinheit (14) und die wenigstens eine zweite Abtasteinheit (60, 60.1, 60.2, 160.1, 160.2) nach dem induktiven Messprinzip aufgebaut ist und jeweils Sensorelemente (15, 62, 62.1, 62.2, 162.1, 162.2) in Form von Empfängerspulen zur Detektion eines elektromagnetischen Wechselfeldes aufweist und das jeweilige Messziel (72, 72.1, 72.2, 172.1, 172.2) feldschwächende Eigenschaften aufweist.

5. Positionsmesseinrichtung nach Anspruch 4, wobei das Messziel (72, 72.1, 72.2, 172.1, 172.2) ein Trägerelement (78) umfasst, auf dem wenigstens ein leitfähiger Bereich (76, 176) angeordnet ist.

6. Positionsmesseinrichtung nach Anspruch 4, wobei das Messziel (173.1, 172.2) als Messteilungssegment ausgestaltet ist und auf dem Trägerelement (78) eine Mehrzahl von leitfähigen Bereichen (76, 176) entsprechend einer Teilungsperiode (T) in Querrichtung (X) angeordnet sind und wobei die Sensorelemente (162.1, 162.2) der zweiten Abtasteinheit (160.1, 160.2) jeweils zwei Empfängerspulen umfassen, deren Leiterschleifen ebenfalls entsprechend der Teilungsperiode (T) in Querrichtung (X) angeordnet sind und die zwei Empfängerspulen in Querrichtung (X) um eine viertel Teilungsperiode (T) versetzt zueinander angeordnet sind.

7. Verfahren zum Betreiben einer Positionsmesseinrichtung nach Anspruch 1.

8. Verfahren zum Betreiben einer Positionsmesseinrichtung nach Anspruch 7, wobei in der Auswerteeinheit (80, 180) als Messwert (M)
• der Abstand (D1, D2) zwischen dem Messziel (72, 72.1, 72.2, 172.1, 172.2) und der zweiten Abtasteinheit (60, 60.1, 60.2, 160.1, 160.2) in einer Richtung (Z), die in Achsrichtung der Welle (5) verläuft, oder/und
• eine Parallelverschiebung des Messziels (72, 72.1, 72.2, 172.1, 172.2) in einer Querrichtung (X), die senkrecht zur Richtung (Z) angeordnet ist, oder/und
• Kenngrößen für Vibrationen des Messziels (72, 72.1, 72.2, 172.1, 172.2) bezogen auf die zweite Abtasteinheit (60, 60.1, 60.2, 160.1, 160.2)
ermittelt wird.

## Claims

1. Position measuring device comprising
• a graduation carrier (12) which can be connected to a shaft (5) in a rotationally fixed manner and has a measurement graduation (13) which, in the mounted state of the graduation carrier (12), is arranged radially around an axis of rotation of the shaft (5),
• a scanning unit (14) having sensor elements (15) for generating position signals (PS) by scanning the measurement graduation (13), wherein the sensor elements (15) and the measurement graduation (13) are arranged at a substantially constant scanning distance (A) from one another,
• a position processing unit (20) for processing the position signals (PS) to form absolute, digital position values (P),
• an interface unit (30) for communicating with downstream electronics (100),
wherein the position measuring device also comprises
• at least one second scanning unit (60, 60.1, 60.2, 160.1, 160.2) for generating measurement signals (MS), which are dependent on a position of a machine part (70, 70.1, 70.2) that differs from the shaft (5), by scanning a measurement target (72, 72.1, 72.2, 172.1, 172.2) on the machine part (70, 70.1, 70.2),
• an evaluation unit (80, 180) for processing the measurement signals (MS) to form at least one measured value (M), which indicates a position or/and a position change of the measurement target (72, 72.1, 72.2, 172.1, 172.2) based on the second scanning unit (60, 60.1, 60.2, 160.1, 160.2), and for outputting the at least one measured value (M) to the interface unit (30), and
• a housing (40) for accommodating the scanning unit (14), the second scanning unit (60, 60.1, 60.2, 160.1, 160.2) and the electronic modules such as the position processing unit (20), the interface unit (30) and the evaluation unit (80, 180),
wherein the graduation carrier (12) and the measurement target (72) are located outside the housing,
wherein the position measuring device also comprises the measurement target (72).

2. Position measuring device according to Claim 1, wherein the measured value (M) determined in the evaluation unit (80, 180) indicates
• the distance (D1, D2) between the measurement target (72, 72.1, 72.2, 172.1, 172.2) and the second scanning unit (60, 60.1, 60.2, 160.1, 160.2) in a direction (Z) which runs in the axial direction of the shaft (5), or/and
• a parallel displacement of the measurement target (72, 72.1, 72.2, 172.1, 172.2) in a transverse direction (X) which is arranged perpendicular to the direction (Z), or/and
• characteristic variables for vibrations of the measurement target (72, 72.1, 72.2, 172.1, 172.2) based on the second scanning unit (60, 60.1, 60.2, 160.1, 160.2).

3. Position measuring device according to one of the preceding claims, wherein the scanning unit (14) and the second scanning unit (60, 60.1, 60.2, 160.1, 160.2) are arranged together on a common carrier element (50) within the housing (40), wherein the position measuring device likewise comprises the carrier element (50).

4. Position measuring device according to Claim 3, wherein the scanning unit (14) and the at least one second scanning unit (60, 60.1, 60.2, 160.1, 160.2) are constructed according to the inductive measurement principle and each have sensor elements (15, 62, 62.1, 62.2, 162.1, 162.2) in the form of receiver coils for detecting an alternating electromagnetic field, and the respective measurement target (72, 72.1, 72.2, 172.1, 172.2) has field-weakening properties.

5. Position measuring device according to Claim 4, wherein the measurement target (72, 72.1, 72.2, 172.1, 172.2) comprises a carrier element (78) on which at least one conductive region (76, 176) is arranged.

6. Position measuring device according to Claim 4, wherein the measurement target (173.1, 172.2) is in the form of a measurement graduation segment, and a plurality of conductive regions (76, 176) are arranged on the carrier element (78) in a manner corresponding to a graduation period (T) in the transverse direction (X), and wherein the sensor elements (162.1, 162.2) of the second scanning unit (160.1, 160.2) each comprise two receiver coils, the conductor loops of which are likewise arranged in a manner corresponding to the graduation period (T) in the transverse direction (X), and the two receiver coils are arranged in a manner offset by a quarter of a graduation period (T) with respect to one another in the transverse direction (X).

7. Method for operating a position measuring device according to Claim 1.

8. Method for operating a position measuring device according to Claim 7, wherein
• the distance (D1, D2) between the measurement target (72, 72.1, 72.2, 172.1, 172.2) and the second scanning unit (60, 60.1, 60.2, 160.1, 160.2) in a direction (Z) which runs in the axial direction of the shaft (5), or/and
• a parallel displacement of the measurement target (72, 72.1, 72.2, 172.1, 172.2) in a transverse direction (X) which is arranged perpendicular to the direction (Z), or/and
• characteristic variables for vibrations of the measurement target (72, 72.1, 72.2, 172.1, 172.2) based on the second scanning unit (60, 60.1, 60.2, 160.1, 160.2)
is/are determined as the measured value (M) in the evaluation unit (80, 180).

## Revendications

1. Dispositif de mesure de position, comprenant
• un support de graduation (12), qui peut être relié de manière solidaire en rotation à un arbre (5), comportant une graduation de mesure (13) qui, à l'état monté du support de graduation (12), est disposée radialement autour d'un axe de rotation de l'arbre (5),
• une unité de balayage (14) comportant des éléments de détection (15), pour générer des signaux de position (PS) par balayage de la division de mesure (13), les éléments de détection (15) et la division de mesure (13) étant disposés à une distance de balayage (A) sensiblement constante les uns par rapport aux autres,
• une unité de traitement de position (20) destinée à transformer les signaux de position (PS) en valeurs de position numériques absolues (P),
• une unité d'interface (30) pour les communications avec une électronique consécutive (100),
dans lequel le dispositif de mesure de position comprend en outre
• au moins une deuxième unité de balayage (60, 60.1, 60.2, 160.1, 160.2) destinée à générer des signaux de mesure (MS) qui dépendent d'une position d'une partie de machine (70, 70.1, 70.2) différente de l'arbre (5), par balayage d'une cible de mesure (72, 72.1, 72.2, 172.1, 172.2) sur la partie de machine (70, 70.1, 70.2),
• une unité d'évaluation (80, 180) destinée à transformer les signaux de mesure (MS) en au moins une valeur de mesure (M) qui indique une position ou/et un changement de position de la cible de mesure (72, 72.1, 72.2, 172.1, 172.2) par rapport à la deuxième unité de balayage (60, 60.1, 60.2, 160.1, 160.2) et à fournir en sortie ladite au moins une valeur de mesure (M) à l'unité d'interface (30) et
• un boîtier (40) destiné à recevoir l'unité de balayage (14), la deuxième unité de balayage (60, 60.1, 60.2, 160.1, 160.2) et les modules électroniques, comme l'unité de traitement de position (20), l'unité d'interface (30) et l'unité d'évaluation (80, 180),
dans lequel le support de graduation (12) et la cible de mesure (72) sont situés à l'extérieur du boîtier,
dans lequel le dispositif de mesure de position comprend en outre la cible de mesure (72).

2. Dispositif de mesure de position selon la revendication 1, dans lequel la valeur de mesure (M) déterminée dans l'unité d'évaluation (80, 180) indique
• la distance (D1, D2) entre la cible de mesure (72, 72.1, 72.2, 172.1, 172.2) et la deuxième unité de balayage (60, 60.1, 60.2, 160.1, 160.2) dans une direction (Z) qui s'étend dans la direction axiale de l'arbre (5), ou/et
• un déplacement parallèle de la cible de mesure (72, 72.1, 72.2, 172.1, 172.2) dans une direction transversale (X) qui est orientée perpendiculairement à la direction (Z), ou/et
• des grandeurs caractéristiques de vibrations de la cible de mesure (72, 72.1, 72.2, 172.1, 172.2) par rapport à la deuxième unité de balayage (60, 60.1, 60.2, 160.1, 160.2).

3. Dispositif de mesure de position selon l'une des revendications précédentes, dans lequel l'unité de balayage (14) et la deuxième unité de balayage (60, 60.1, 60.2, 160.1, 160.2) sont disposées ensemble sur un élément de support commun (50) à l'intérieur du boîtier (40),
dans lequel le dispositif de mesure de position comprend également l'élément de support (50).

4. Dispositif de mesure de position selon la revendication 3, dans lequel l'unité de détection (14) et ladite au moins une deuxième unité de détection (60, 60.1, 60.2, 160.1, 160.2) sont réalisées selon le principe de mesure par induction et comportent respectivement des éléments de détection (15, 62, 62.1, 62.2, 162.1, 162.2) sous la forme de bobines réceptrices permettant de détecter un champ électromagnétique alternatif et la cible de mesure (72, 72.1, 72.2, 172.1, 172.2) respective présente des propriétés d'affaiblissement de champ.

5. Dispositif de mesure de position selon la revendication 4, dans lequel la cible de mesure (72, 72.1, 72.2, 172.1, 172.2) comprend un élément de support (78) sur lequel est disposée au moins une zone conductrice (76, 176).

6. Dispositif de mesure de position selon la revendication 4, dans lequel la cible de mesure (173.1, 172.2) est réalisée sous la forme d'un segment de division de mesure et une pluralité de zones conductrices (76, 176) sont disposées sur l'élément de support (78) en correspondance avec une période de division (T) dans la direction transversale (X) et dans lequel les éléments de détection (162.1, 162.2) de la deuxième unité de balayage (160.1, 160.2) comprennent chacun deux bobines réceptrices dont les boucles conductrices sont également disposées en correspondance avec la période de division (T) dans la direction transversale (X) et les deux bobines réceptrices sont disposées de manière décalée l'une par rapport à l'autre d'un quart de période de division (T) dans la direction transversale (X).

7. Procédé de fonctionnement d'un dispositif de mesure de position selon la revendication 1.

8. Procédé de fonctionnement d'un dispositif de mesure de position selon la revendication 7, dans lequel l'unité d'évaluation (80, 180) détermine en tant que valeur de mesure (M)
• la distance (D1, D2) entre la cible de mesure (72, 72.1, 72.2, 172.1, 172.2) et la deuxième unité de balayage (60, 60.1, 60.2, 160.1, 160.2) dans une direction (Z) qui s'étend dans la direction axiale de l'arbre (5), ou/et
• un déplacement parallèle de la cible de mesure (72, 72.1, 72.2, 172.1, 172.2) dans une direction transversale (X) qui est orientée perpendiculairement à la direction (Z), ou/et
• des grandeurs caractéristiques de vibrations de la cible de mesure (72, 72.1, 72.2, 172.1, 172.2) par rapport à la deuxième unité de balayage (60, 60.1, 60.2, 160.1, 160.2).
